# EUROPEAN PATENT APPLICATION

(11) **EP 3 165 931 A1**
(43) Date of publication of application: **10.05.2017**
(21) Application number: 15003197.9
(22) Date of filing: 09.11.2015
(51) Int. Cl.: G01N 35/10, B01L 3/02

(54) **USE OF A PRESSURE SENSOR IN LIFE SCIENCE APPLICATIONS**

(71) Applicant: Euroimmun Medizinische Labordiagnostika AG, 23560 Lübeck (DE)
(72) Inventor: Wessel, Siegfried, 23627 Groß Grönau (DE)

(57) **Abstract**

The invention relates to a method for detecting an abnormity in a fluid of a human or animal sample, to a computer program, to a machine-readable storage unit and to the use of a pressure sensor adapted for performing the steps of the method in at least one of the following applications: analyzing a serum or a fluid sample, diagnosing an abnormity in a human or animal sample and detecting abnormities when aspiring or dispensing a liquid or a fluid of a human or animal sample. The method comprises the steps: a) aspiring or dispensing (1) the fluid, thereby utilizing a needle for pipetting the fluid; b) measuring (2) a pressure in proximity of the needle; and c) detecting (3) the abnormity based on the result of the previous step. In this way, a possibility for detecting abnormities in life science applications is provided that is accurate, reproducible and adapted for minimizing external influences, such as disturbances and noise, while being simple and cost-effective to realize.

## Description

### FIELD OF THE INVENTION

The invention relates to a method for detecting an abnormity in a fluid of a human or animal sample, to a computer program and to a machine-readable storage unit. Further, the invention relates to the use of a pressure sensor adapted for performing the steps of the method in at least one of the following applications: analyzing a serum or a fluid sample, diagnosing an abnormity in a human or animal sample and detecting abnormities when aspiring or dis-pen-sing a liquid or a fluid of a human or animal sample.

### BACKGROUND OF THE INVENTION

GB 2 005 415 A describes a liquid level detection system. The liquid level detection system includes a probe having three insulated conducting elements supplied with a periodically varying current. In such a system a current flows through the liquid when the level reaches a predetermined element of the system. Further, the liquid level detection system is provided with a fail-safe circuit.

DE 10 2011 118612 B4 describes a pipetting apparatus having at least two vessels, two pipetting tips and two actuating units, wherein the pipetting tips are separated from each other through the actuating units and are moveable relative to the vessels.

Detecting anomalies or anomaly phenomena during aspiration of fluids or liquids is crucial for the result of a pipetting process. It is rather difficult to carry out a plausibility test of the aspiration operation together with the liquid level detection. Furthermore, it is also difficult to surveil the dispensing operation and detect additional information about the washing operation of the pipetting needle.

Anomalies are mainly caused by foam and clot in the sera and thus influence an accurate recording of volumes during the aspiration operation. Particularly foam prevents the accurate detection of the liquid surface by means of the liquid level detection, which has the consequence that air is sucked substantially. Also clot represents a problem, as this may clog the needle. Even when the aspiration operation is correctly performed, the pressure measurement in the system, which consists of liquid-filled and gas hoses or tubes, represents a challenge. The change in pressure during a slow aspiration is carried out in the range of a few mbar up to 100 mbar. To this pressure the hydrostatic pressure of the water column above the sensor is added, which results from the vertical distance to the reservoir with the system liquid. This distance can be a few cm up to 100 cm. If one considers that 100 cm water column causes a hydrostatic pressure of 100 mbar, the operating point of ± 100 mbar of the pressure sensor would already be at the upper limit of its measuring range in the worst case. In addition, the vertical feed of the pipetting needle causes an additional variation of the hydrostatic pressure. Even changes in air pressure and capillary effects have an impact on the system. Therefore, the conditions are difficult and poorly reproducible.

Washing a reusable needle by aspiration of serum is an essential and necessary process in analysis technology. This process is carried out in a special container by dispensing system fluid through the needle. If the pressure is monitored during this process, resulting conclusions can be obtained about the quality of the washing process. In order to perform this process in the shortest possible time, the volume flow rate through the needle is increased with the result that the pressure conditions change significantly compared to the aspiration operation.

### SUMMARY OF THE INVENTION

It is the object of the invention to provide a possibility for detecting abnormities in life science applications that is accurate, reproducible and adapted for minimizing external influences, such as disturbances and noise, while being simple and cost-effective to realize.

This object is achieved by the subject matter of the independent claims. Preferred embodiments are defined in the sub claims.

According to a first aspect of the invention, this object is achieved by a method for detecting an abnormity in a fluid of a human or animal sample, comprising the steps: a) aspiring or dispensing the fluid, thereby utilizing a needle for pipetting the fluid; b) measuring a pressure in proximity of the needle; and c) detecting the abnormity based on the result of the previous step.

It is an idea of the invention to utilize an electronic circuit for processing a pressure signal during the aspiration and dispensing operation in order to detect anomaly phenomena. It is a further idea of the invention to avoid readjustments in the measurement system and thus to provide accurate and reproducible results. Further, the impact of external influences is minimized while the idea is simple and cost-effective to realize.

According to a preferred embodiment of the invention, the step of measuring the pressure comprises detecting a change in voltage between two terminals of a tube surrounding the fluid, wherein the change in voltage corresponds to a change in pressure. In this way, when measuring a change in voltage applied to the terminals of the system, information about the change in pressure can be extracted and thus the actual pressure is determinable. When detecting the change in pressure, the method preferably further comprises the steps of amplifying the detected signal that comprises the detected change in pressure; and of filtering the amplified signal. In this way, the signal is amplified and thus signal-to-noise ratio is increased. After the filtering step the noise is eliminated or almost eliminated such that signal-to-noise ratio is further increased. After the step of filtering the amplified signal, the method preferably further comprises the steps of storing the resulting signal that results after the step of amplification and filtering; and of comparing the stored signal with a control signal such that when the control signal is set to zero, the stored signal is directed to a control circuit adapted for compensating the detected change in pressure, and when the control signal is set to one, the resul-ting signal is output. In this way, any static or dynamic pressure change to the ambient pressure is compensated. It is preferably started from a well-defined reference point, i.e. the refe-rence voltage value and thus one remains in the operating point within the control ranges of amplification. Preferably, the measured pressure is in the range of a few mbar. According to other preferred embodiments, the measured pressure is in the range of up to one bar. Accor-ding to yet other preferred embodiments, the measured pressure is in the range of between one bar and ten bar.

According to a preferred embodiment of the invention, the fluid or liquid comprises a serum of a human and/or an animal. Therefore, the idea is applicable to both human and animal samples, wherein the fluid is preferably a serum or any other liquid medium, such as urine.

According to a second aspect of the invention, above-mentioned object is achieved by a computer program, loadable or loaded in a memory of a computer with orders readable by the computer for performing the method according to the first aspect of the invention, when the orders are performed on the computer.

According to a third aspect of the invention, above-mentioned object is achieved by a machine-readable storage unit, on which a computer program according to the second aspect of the invention is stored.

According to a fourth aspect of the invention, above-mentioned object is achieved by the use of a pressure sensor adapted for performing the steps of the method according to the first aspect of the invention in at least one of the following applications: analyzing a serum or a fluid sample, diagnosing an abnormity in a human or animal sample and detecting abnormities when aspiring or dispensing a liquid or a fluid of a human or animal sample.

### BRIEF DESCRIPTION OF THE DRAWINGS

These and other aspects of the invention will be apparent from and elucidated with reference to the embodiments described hereinafter which should be considered as examples of the invention without limiting the scope of the invention.

In the drawings:
- Fig. 1: schematically illustrates the steps of a method for detecting an abnormity in a fluid of a human or animal sample according to a first preferred embodiment of the invention;
- Fig. 2: shows a differential pressure sensor according to a second preferred embodiment of the invention;
- Fig. 3: shows an operational amplifier circuit according to a third preferred embodiment of the invention; and
- Fig. 4: shows an electronic circuit for detecting an abnormity in a fluid of a human or animal sample according to a fourth preferred embodiment of the invention.

### DETAILED DESCRIPTION OF EMBODIMENTS

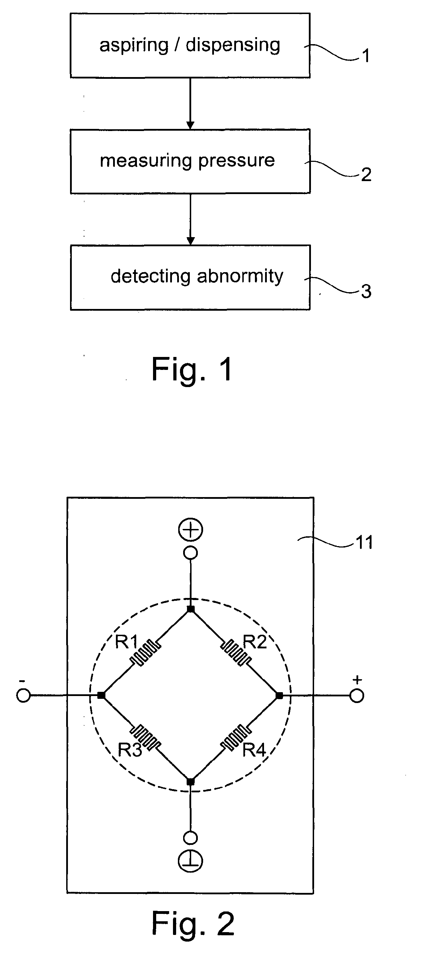

Fig. 1 illustrates the steps of a method for detecting an abnormity in a fluid of a human or animal sample according to a first preferred embodiment of the invention. The method comprises three steps: In a first step, the fluid is aspired or dispensed 1, thereby a needle for pipetting the fluid is utilized. In a second step, a pressure in proximity of the needle is measured 2. In a final step, the abnormity is detected 3 based on the result of the previous step.

In this first preferred embodiment, the fluid corresponds to a serum of a human sample. The step of measuring 2 the pressure corresponds to detecting a change in voltage between two terminals of a tube surrounding the fluid. The detected signal is amplified, wherein the detected signal comprises the detected change in voltage corresponding to the detected change in pressure. After this step, the amplified signal is filtered. After the step of filtering the amplified signal, the resulting signal is stored, wherein the resulting signal results after the step of amplification and filtering, and, finally, the stored signal is compared with a control signal such that when the control signal is set to zero, the stored signal is directed to a control circuit adapted for compensating the detected change in pressure, and when the control signal is set to one, the resulting signal is output.

Fig. 2 shows a differential pressure sensor 11 according to a second preferred embodiment of the invention. An electronic circuit for signal processing of a differential pressure sensor has to be realized that can handle the low output voltage of the sensor and the large and dynamic change of the operating point due to external influences. Moreover, the signal-to-noise ratio at the required high gain values is to be improved. The measurement of the pressure is free of static and dynamic influences that have nothing to do with the actual aspiration or dispensing operation. The differential pressure sensor 11 is utilized when performing a pressure measurement during a pipetting process in order to detect anomalies when aspiring or dispensing the fluid that is serum of an animal sample in this second preferred embodiment.

In order to achieve the above-mentioned goals a differential or relative pressure sensor 11 is utilized in this second preferred embodiment. One terminal of the pressure sensor is connected to the tube system to which the pipetting needle is connected, the other terminal remains open and is related with the ambient air pressure as a reference value. This is the starting point of a relative measurement, since the temporal behavior of the ambient pressure is approximately constant with regard to the actual pressure measurement during the aspiration or dispensing operation.

The differential or relative pressure sensor 11 in Fig. 2 consists of a membrane on which strain gauges are provided in the form of a bridge circuit according to Wheatstone. Both sides of the membrane are guided through ducts to the outside of the hose or tube connections. A voltage source supplies the two parallel-connected voltage dividers of the resistive bridge. In the idle state, no voltage difference occurs between the two voltage dividers in a well-adjusted bridge. However, the membrane is deflected by a pressure difference between the terminals and thus the resistances of the strain gauges change and also the ratios of the voltage dividers change, which causes that a voltage difference in the diagonal branch of the bridge is measu-rable. This voltage difference is proportional and linear to the pressure difference and can therefore be further processed as a measurement value for the pressure.

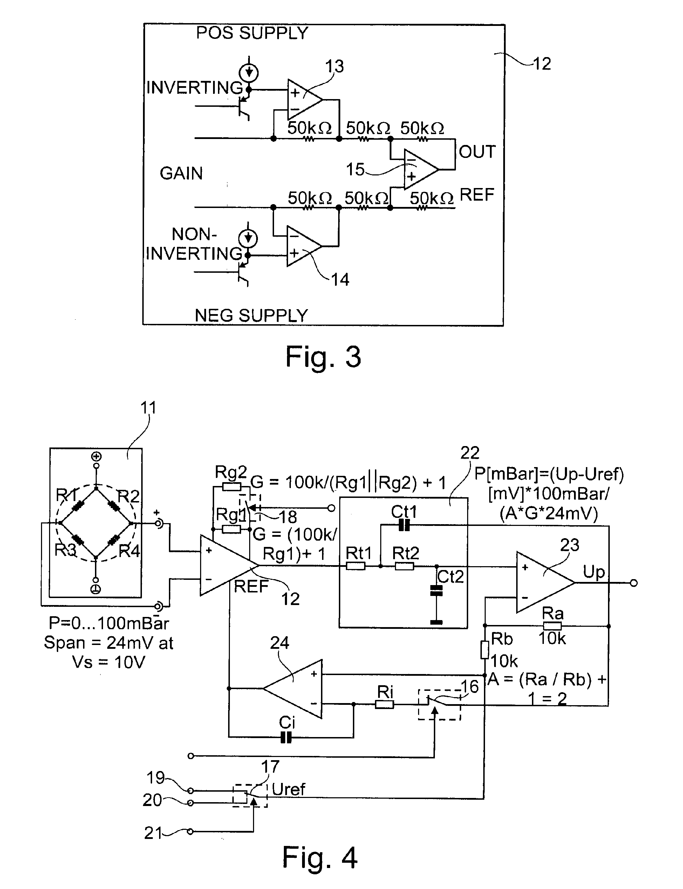

The above-mentioned further processing is done with an instrumental amplifier 12 shown in Fig. 3. Fig. 3 shows an operational amplifier circuit 12 according to a third preferred embodiment of the invention. One particularly precise operational amplifier circuit 12 with high input impedance and common mode rejection is illustrated in this figure. The most common variant of this circuit 12 comprises three operational amplifiers 13, 14, 15 connected to resistors that are tuned to one another and all elements are integrated in the circuit. The peculiarity of the instrumental amplifier 12 used here is a lead-out reference input, which can affect the output voltage of the amplifier. The circuit concept underlying this third preferred embodiment is responsible for this effect. The gain can be influenced by means of a single externally arranged resistor. The gain of the instrumental amplifier 12 is calculated at a predetermined gain level by means of the formula Gain = 100kΩ / Rg + 1. But if it is necessary to adapt the gain to other pressure conditions, this can be achieved by adding other resistors in parallel or serial circuit technique.

After signal processing by the instrumental amplifier 12, a further processing of the signal is performed by an operational amplifier (signal amplifier), which substantially provides a filtering and impedance matching but merely shows a relatively low gain. Hence, a high amplification of the instrumental amplifier 12 is utilized. Due to the small signals from the pressure sensor, the signal-to-noise ratio has to be increased. However, since the noise components are located in a higher frequency range than the useful signal, one achieves a substantial improvement when utilizing a low-pass filter. This becomes even more important because the signal is digitized by means of an A/D converter. If signal components are located at above half the sampling frequency (Nyquist frequency) and this is valid for noise, aliasing may occur. This leads to errors in the sampled signal which no longer can be corrected subsequently.

In order to avoid this problem, an active low-pass filter (anti-aliasing filter) of second order according to Sallen and Key is provided around an operational amplifier in this third preferred embodiment. The negative feedback of the operational amplifier is generated with two equal-sized resistors providing a gain of 2 and allowing to set the non-inverting input of the operational amplifier on a freely selectable reference potential. The output of the operational amplifier is also simultaneously the output of this special electronic circuit and shows a low impe-dance to drive the subsequent circuit components easily.

An analog value memory is an operational amplifier with a capacitor of high capacity in the negative feedback branch and is also known as inverting integrator circuit. The output of the integrator is connected to the reference input of the instrumental amplifier 12 and thus affects its output. It is an idea of the invention to use the integrator circuit together with an analog switch as a storage of an analog voltage.

An electronic analog switch allows like a mechanical switch or relay to forward analog signals or to interrupt them. For this a control signal is required, which can show two states 1 (high) and 0 (low). In the fourth preferred embodiment shown in Fig. 4 the control signal stems from a microcontroller. In this concept, the analog switch 16 is inserted before the analog value memory 24 which is closed in the idle state, the control signal is 0. Hence, the conditioned signal passes from the pressure sensor to the integrator input and thus provides a control circuit. If the control signal is set to 1, the analog switch interrupts the signal from the pressure sensor and the output of the integrator holds the last output voltage. The analog switch 18 operates to select the gain of the instrumental amplifier 12, except that an actively closing switch is used. The two reference voltages are applied to the control circuit via the analog switch 17 in accordance with the principle of change-over.

The circuit components described above are combined into a common special electronic circuit illustrated in Fig. 4. In the idle or stationary state, the control signal from the analog switch 16 is logic 0 and the analog switch is closed, the circuit operates as a closed control circuit. The reference potential of the measuring signal is selected by means of a reference voltage source. This potential is also set at the signal output in the idle or stationary state. It serves as a reference point for the voltage measurement by an A/D converter in a microcontroller in this fourth preferred embodiment. If the input signal range of an A/D converter lies between 0 V and 3 V and the reference voltage is set to 1.5 V, both pressure measurements above as well below 19, 20 the ambient pressure are carried out and further processed as di-gitized voltage values. But if half the input voltage range of the digital resolution in the aspiration and dispensing operation is less accurate, the measurement range can be enlarged by selecting two reference voltages. For this purpose, the reference threshold is applied to the upper end of the voltage range to detect the aspiration operation with a high resolution and the other reference threshold is then applied to the lower end of the voltage range to detect the dispensing operation with a high resolution. If both thresholds are switched, this results in measurement range switching 21.

If one considers the closed control circuit again and the pressure at the sensor changes to the positive relative to the ambient pressure, for instance due to downward movement of the needle, thereby increasing the water column in the tube system, also the voltage at the output of the instrumental amplifier 12 increases. This voltage increase is passed through the low pass filter 22 to the signal amplifier 23 and from there via the closed analog switch 16 to the inverting input of the integrator 24. The integrator 24 compares this voltage with the reference voltage at its non-inverting input and decreases its output voltage in this case. Thereby also the voltage at the reference input of the instrumental amplifier 12 is reduced, which in turn results in that the voltage at its output is smaller. Hence, the output voltage is the same vol-tage as the output at the reference voltage input. Therefore, any static or dynamic pressure change is compensated with this closed control circuit.

If, however, shortly before an aspiration or dispensing operation the analog switch 16 is opened by a logic high at the control input, the preset voltage from the analog value memory 24 (integrator) is maintained at the reference input of the instrumental amplifier 12. From this point any change in pressure at the sensor is displayed as a voltage change at the signal output.

The electronic circuit design illustrated in Fig. 4 compensates any static or dynamic pressure change with regard to the ambient pressure, as long as the control circuit is closed. If the control circuit is opened, the pressure-measuring process always starts from a well-defined refe-rence point, i.e. at the reference voltage value. So with the operating point one always remains within the control ranges of instrumental and signal amplifier 12, 23 and is able to optimally adapt their gain to the pressure sensor and the A/D converter. Thus, also the voltage range of the pressure sensor can be fully utilized, i.e. the voltage difference between the output voltage at the sensor without pressure and at maximum pressure.

In other preferred embodiments of the invention, the instrumental amplifier 12 is replaced by a single or a plurality of operational amplifiers. The analog value memory 24 is replaced by a D/A converter and the analog switch 16 is replaced by a reed relay. In yet other preferred embodiments of the invention, a combination of several units and elements of different embodiments is utilized.

As explained above, the invention relates to a method for detecting an abnormity in a fluid of a human or animal sample, to a computer program, to a machine-readable storage unit and to the use of a pressure sensor adapted for performing the steps of the method in at least one of the following applications: analyzing a serum or a fluid sample, diagnosing an abnormity in a human or animal sample and detecting abnormities when aspiring or dispensing a liquid or a fluid of a human or animal sample. The method comprises the steps: a) aspiring or dispensing 1 the fluid, thereby utilizing a needle for pipetting the fluid; b) measuring 2 a pressure in proximity of the needle; and c) detecting 3 the abnormity based on the result of the previous step. In this way, a possibility for detecting abnormities in life science applications is provi-ded that is accurate, reproducible and adapted for minimizing external influences, such as disturbances and noise, while being simple and cost-effective to realize.

## Claims

1. A method for detecting an abnormity in a fluid of a human or animal sample, comprising the steps:
a) aspiring or dispensing (1) the fluid, thereby utilizing a needle for pipetting the fluid;
b) measuring (2) a pressure in proximity of the needle; and
c) detecting (3) the abnormity based on the result of the previous step.

2. The method according to claim 1, wherein the step of measuring (2) the pressure comprises detecting a change in voltage between two terminals of a tube surrounding the fluid, wherein the change in voltage corresponds to a change in pressure.

3. The method according to claim 2, wherein when detecting the change in pressure, the method further comprises the steps:
amplifying the detected signal that comprises the detected change in pressure; and filtering the amplified signal.

4. The method according to claim 3, wherein after the step of filtering the amplified signal, the method further comprises the steps:
storing the resulting signal that results after the step of amplification and filtering; and
comparing the stored signal with a control signal such that when the control signal is set to zero, the stored signal is directed to a control circuit adapted for compensating the detected change in pressure, and when the control signal is set to one, the resulting signal is output.

5. The method according to one of the preceding claims, wherein the fluid comprises a serum of a human and/or an animal.

6. A computer program, loadable or loaded in a memory of a computer with orders readable by the computer for performing the method according to one of the preceding claims, when the orders are performed on the computer.

7. A machine-readable storage unit, on which a computer program according to the preceding claim is stored.

8. Use of a pressure sensor adapted for performing the steps of the method according to one of claims 1 to 5 in at least one of the following applications: analyzing a serum or a fluid sample, diagnosing an abnormity in a human or animal sample and detecting abnormities when aspiring or dispensing a liquid or a fluid of a human or animal sample.
